Europäisches Patentamt

**European Patent Office**

**Office européen des brevets**

(19)

(11) Numéro de publication : **0 227 562**
**B1**

(12)

# FASCICULE DE BREVET EUROPÉEN

(45) Date de publication du fascicule du brevet :
07.06.89

(51) Int. Cl.⁴ : **B 01 J 13/02**

(21) Numéro de dépôt : **86420288.2**

(22) Date de dépôt : **25.11.86**

(54) Procédé de microencapsulation par polyaddition interfaciale.

(30) Priorité : **10.12.85 FR 8518453**

(43) Date de publication de la demande :
**01.07.87 Bulletin 87/27**

(45) Mention de la délivrance du brevet :
**07.06.89 Bulletin 89/23**

(84) Etats contractants désignés :
**AT BE CH DE ES FR GB GR IT LI LU NL SE**

(56) Documents cités :
EP—A— 0 040 770
DE—A— 2 342 066
FR—A— 2 498 474
GB—A— 2 055 739

(73) Titulaire : **RHONE-POULENC CHIMIE**
**25, quai Paul Doumer**
**F-92408 Courbevoie Cédex (FR)**

(72) Inventeur : **Vivant, Gilbert**
**87 ter, rue du Docteur Edmond Locard**
**F-69005 Lyon (FR)**

(74) Mandataire : **Vignally, Noel et al**
**RHONE-POULENC INTERSERVICES Service Brevets**
**Chimie Centre de Recherches de Saint-Fons B.P. 62**
**F-69192 Saint-Fons Cedex (FR)**

## Description

La présente invention a trait à la microencapsulation de divers composés par polyaddition interfaciale.

Plus particulièrement elle concerne la préparation de microcapsules dont la paroi est constituée de polyurée.

Le brevet américain No. 3 577 515 décrit l'encapsulation de divers produits, par condensation interfaciale d'intermédiaires organiques complémentaires, susceptibles de former des polyamides, des polysulfonamides, des polyesters, des polycarbonates, des polyuréthanes ou des polyurées. Ces intermédiaires organiques complémentaires sont contenus dans des liquides séparés sensiblement non miscibles, tels que notamment l'eau et un solvant organique non miscible à l'eau. Ainsi dans ce brevet est exemplifiée la préparation de capsules à parois en polyurée, par condensation interfaciale de diisocyanates ou de polyisocyanates avec une diamine et/ou une triamine.

L'utilisation de nombreux diisocyanates ou polyisocyanates a été décrite dans des brevets postérieurs au brevet US 3 577 515. Ainsi le diisocyanato-1,6 hexane est notamment cité. L'utilisation de trimères du diisocyanato-1,6 hexane a également été préconisée, soit le trimère à groupement biuret, soit le trimère à cycle isocyanurate. Ainsi la demande de brevet européen publiée sous le numéro 40.770 décrit un procédé de préparation de suspensions aqueuses de microcapsules, par polyaddition interfaciale d'un polyisocyanate aliphatique à groupement isocyanurate avec un composé à hydrogène actif, le pH étant amené en fin de polyaddition à une valeur égale ou inférieure à 7.

La demande de brevet français No. 2.498.474 décrit un procédé de préparation de microcapsules par émulsion dans un liquide hydrophile d'un liquide hydrophobe contenant un polyisocyanate aromatique et un isocyanate aliphatique tel que le trimère du diisocyanato-1,6 hexane à groupement biuret ou le trimère du diisocyanato-1,6 hexane à cycle isocyanurate. L'utilisation d'un polyisocyanate aromatique présente l'inconvénient de conduire souvent à des colorations indésirables, notamment pour les applications papetières.

Il a maintenant été trouvé, ce qui constitue un objet de la présente invention, un procédé amélioré de microencapsulation par polyaddition interfaciale, consistant à émulsionner dans un liquide essentiellement aqueux un liquide hydrophobe contenant un polyisocyanate et éventuellement un produit organique disous, puis à former les parois des microcapsules par addition d'une polyamine, ledit procédé étant caractérisé en ce que le polyisocyanate comprend :

un diisocyanate aliphatique

et le trimère à cycle isocyanurate d'un diisocyanate aliphatique, avec un rapport pondéral diisocyanate aliphatique/trimère de 0,05/l à 0,70/l.

Le trimère à cycle isocyanurate peut être le trimère du diisocyanate aliphatique utilisé ou le trimère d'un autre diisocyanate aliphatique.

Comme diisocyanate aliphatique, on peut utiliser par exemple le diisocyanato-1,6 hexane, le diisocyanato-1,5 méthyl-2 pentane, le diisocyanato-1,5 méthyl-3 pentane, le diisocyanato-1,4 diméthyl-2,3 butane, l'éthyl-2 diisocyanato-1,4 butane, le diisocyanato-1,5 pentane, le diisocyanato-1,4 butane, le diisocyanato-1,3 propane, le diisocyanato-1,10 décane, le diisocyanato-1,2 cyclohexane, le diisocyanato-1,4 cyclohexane, le bis(isocyanatométhyl)-1,2 cyclobutane, le bis(isocyanato-4 cyclohexyl) méthane, le triméthyl-3,3,5 isocyanatométhyl-5 isocyanato-1 cyclohexane.

Les trimères à cycle isocyanurate de ces diisocyanates aliphatiques sont préparés de manière connue en soi. On peut par exemple les obtenir par chauffage en présence d'un catalyseur tel qu'une amine tertiaire, une phosphine, un oxyde, hydroxyde ou carboxylate de métal alcalin ou alcalino-terreux. Ces catalyseurs sont décrits dans « Journal of Cellular Plastics » de janvier 1965 pages 85 à 90 ou dans « Macromolecular Chemistry » (5/1) pages 103 à 109 (1970).

La demande de brevet français No. 81/02192 (publiée sour le numéro 2.499.085) décrit un procédé de préparation de ces composés à groupement isocyanurate par cyclotrimérisation d'isocyanates aliphatiques catalysé par un disilazane substitué.

La demande de brevet français No. 81/23.135 (publiée sous le numéro 2.517.674) décrit un procédé identique au précédent catalysé par un composé à groupement aminosilylé.

De préférence, le rapport pondéral diisocyanate aliphatique/trimère est de 0,10/l à 0,45/l.

Parmi les diisocyanates aliphatiques que l'on peut utiliser dans le présent procédé, on préfère plus particulièrement le diisocyanato-1,6 hexane (HDI). De préférence le diisocyanato-1,6 hexane est utilisé avec son trimère tris(isocyanato-6 hexyl)-1,3,5 isocyanurate.

La polyamine, que l'on fait réagir sur les composés à groupements isocyanates pour former les parois des microcapsules, est choisie parmi celles qui comprennent au moins deux groupements amine primaire ou secondaire et qui peuvent se dissoudre ou se disperser dans l'eau.

On peut citer à titre d'exemples des diamines comme l'éthylènediamine-1,2, le diamino-1,3 propane, le diamino-1,4 butane, le diamino-1,6 hexane, l'hydrazine, le diamino-1,4 cyclohexane et le diamino-1,3 méthyl-1 propane.

On peut également citer la diéthylènetriamine, la triéthylènetétramine et la bis(méthyl-2 aminoéthyl) méthylamine.

On peut bien évidemment utiliser des mélanges de polyamines, par exemple une diamine et une tri- ou tétraamine.

Le liquide hydrophobe dans lequel se trouvent le composé à fonctions isocyanate et éventuellement un produit organique à encapsuler peut être tout liquide essentiellement non miscible à l'eau et pouvant dissoudre les composés précédents.

Le liquide hydrophobe peut également être constitué par le produit organique à encapsuler lorsque celui-ci est liquide et lorsqu'il est utilisé pour des applications nécessitant une forte concentration en produit actif.

On peut utiliser par exemple un hydrocarbure aliphatique, un hydrocarbure aliphatique chloré, un hydrocarbure cycloaliphatique, un hydrocarbure cycloaliphatique chloré, un hydrocarbure aromatique ou un hydrocarbure aromatique chloré.

A titre d'exemples de liquide hydrophobe, on peut citer le cyclohexane, le tétrachloroéthylène, le tétrachlorure de carbone, les xylènes, le toluène, les chlorobenzènes, le terphényle hydrogéné au moins partiellement, un alkylbiphényle, un alkylnaphtalène.

Les alkylbiphényles, le terphényle au moins partiellement hydrogéné et les alkylnaphtalènes conviennent tout particulièrement bien pour l'encapsulation de colorants dans les applications papier sans carbone.

Le liquide essentiellement aqueux utilisé dans le procédé de l'invention est généralement l'eau et de préférence une solution aqueuse d'un tensio-actif ou d'un colloïde protecteur hydrophile.

Comme colloïde protecteur convenable, on peut citer par exemple les polyacrylates, les méthylcelluloses, les carboxyméthylcelluloses, l'alcool polyvinylique éventuellement partiellement estérifié ou éthérifié, le polyacrylamide ou les polymères synthétiques à fonction anhydride ou acide carboxylique tels que les copolymères éthylène/anhydride maléique. Il peut être nécessaire, par exemple dans le cas de solutions aqueuses d'un composé cellulosique, d'ajouter un peu d'hydroxyde alcalin tel que la soude, afin de faciliter sa dissolution ; on peut également utiliser directement de tels composés cellulosiques sous la forme de leurs sels de sodium par exemple.

Comme agent tensio-actif, on peut utiliser ceux qui sont cités dans « Encyclopedia of Chemical Technology », volume 8, pages 912 à 915 et qui possèdent une valeur d'équilibre hydrophile lipophile (système HLB) égale ou supérieure à 10.

Généralement on utilise des solutions aqueuses contenant de 0,1 à 5 % en poids de tensio-actif ou de colloïde protecteur défini précédemment.

Le produit se trouvant dans le liquide hydrophobe et que l'on souhaite encapsuler peut être de nature très diverse.

On peut par exemple encapsuler des produits phytosanitaires, tels que des herbicides, des fongicides ou des insecticides, ce qui rend leur manipulation moins dangereuse.

On peut également encapsuler des produits pharmaceutiques, des produits alimentaires, des arômes, des parfums, des colorants, des peintures ou des catalyseurs.

Une des applications préférées du procédé de l'invention réside dans la microencapsulation de colorants, pour la préparation de papier sans carbone sensible à la pression. Le procédé de l'invention conduit à des microcapsules ayant des parois étanches convenant à l'application ; cela permet de préparer des papiers à copies multiples qui ne libèrent pas de colorant lors de leur stockage ou de leur manipulation.

En outre le procédé de l'invention permet de préparer des suspensions de microcapsules ayant une fluidité suffisante pour permettre un couchage régulier et fin sur papier.

A l'aide de ce procédé, on peut obtenir des suspensions de microcapsules de concentrations relativement élevées, ce qui présente un intérêt au plan de l'application papetière, car l'eau doit être ensuite éliminée.

Généralement pour ce type d'application, la concentration en microcapsules est égale ou supérieure à 25 % en poids et de préférence égale ou supérieure à 30 % en poids.

Comme colorants, on peut utiliser notamment les dérivés du triphénylméthane, les dérivés du diphénylméthane, les dérivés du fluorane, des dérivés de la thiazine et des dérivés spiranniques.

Parmi les dérivés du triphénylméthane, on peut citer par exemple le bis(paradiméthylaminophényl)-3,3 diméthylamino-6 phtalide ; le bis(paradiméthylaminophényl)-3,3 phtalide et le (paradiméthylaminophényl)-3 (diméthyl-1,2 indolyl-3)-3 phtalide.

Parmi les dérivés du diphénylméthane, on peut citer par exemple l'oxyde de bis(aminodiméthyl)-4,4' benzhydryle et de benzyle ; une N-halogénophényl-leucoauramine et la N-(trichlorophényl-2,4,5)-leucoauramine.

Parmi les dérivés du fluorane, on peut citer par exemple le chloro-3 diéthylamino-7 fluorane, le chloro-3 diéthylamino-7 méthyl-2 fluorane et le (N-éthylparatolylamino)-6 méthyl-3 phénylamino-2 fluorane.

Parmi les dérivés de la thiazine, on peut citer par exemple le bleu de benzoylleucométhylène et le bleu de paranitrobenzylleucométhylène.

Parmi les dérivés spiranniques, on peut citer par exemple le méthyl-3 spirodinaphtopyranne, l'éthyl-3 spirodinaphtopyranne, le propyl-3 spirodinaphtopyranne et le propyl-3 spirodibenzopyranne.

En pratique on peut réaliser le procédé de la manière suivante.

On prépare une phase aqueuse constituée d'eau, éventuellement additionnée d'un tensioactif ou d'un colloïde protecteur tels que ceux indiqués précédemment. On peut agiter cette phase à plusieurs milliers de tours par minute, à l'aide d'un agitateur turbine, pendant quelques secondes à quelques minutes, mais ce n'est pas indispensable. On ajoute alors la phase hydrophobe constituée par un solvant dans lequel sont dissous le mélange de diisocyanate aliphatique et de son trimère à groupement isocyanurate et le cas échéant le produit à encapsuler. Comme indiqué précédemment, la phase hydrophobe peut être également constituée par le produit organique à encapsuler, lorsqu'il est liquide, et le mélange de diisocyanate aliphatique et de son trimère à cycle isocyanurate. Après une durée d'agitation rapide de quelques secondes à quelques minutes, on obtient une émulsion stable. La vitesse d'agitation est réglée de manière à ce que l'on obtienne des gouttelettes de liquide hydrophobe dans la phase aqueuse de dimensions souhaitées.

La taille des gouttelettes est fonction du choix du colloïde protecteur et de la vitesse d'agitation, cette dernière étant choisie d'autant plus grande que l'on souhaite des diamètres moyens de gouttelettes plus faibles.

En général la vitesse d'agitation pendant la phase d'émulsion est de 5 000 à 10 000 tours par minute. La phase d'émulsion est habituellement effectuée à une température de 15 à 30 °C.

Généralement lorsque la phase d'émulsion est terminée, on arrête l'agitation par turbine et on agite l'émulsion à l'aide d'un agitateur courant, par exemple du type agitateur cadre, à une vitesse de l'ordre de 200 à 1 000 tours par minute.

On ajoute alors une solution aqueuse de polyamine. Habituellement la quantité de polyamine introduite est en excès par rapport à la quantité stœchiométrique nécessaire pour transformer les groupements isocyanate libres en groupements urée. Le plus souvent on introduit de 101 à 150 % de groupements amine par rapport aux groupements isocyanate libres et de préférence de 105 à 125 %.

On peut également à la fin de la phase d'émulsion, transvaser dans un autre réacteur l'émulsion obtenue et procéder ensuite à la phase de polyaddition décrite précédemment.

On laisse s'effectuer la réaction de polyaddition, généralement à une température de 15 °C à 30 °C environ pendant une durée allant de quelques minutes à deux heures. Puis, le plus souvent, la température de l'émulsion est montée jusqu'à environ 50 °C à 80 °C et la réaction est poursuivie à cette température pendant quelques heures, par exemple de 2 à 10 heures.

Le procédé de l'invention conduit ainsi à des suspensions homogènes et fluides contenant, selon les charges introduites, généralement de 20 % à 60 % en poids de microcapsules ayant de 2 à 100 µm de diamètre moyen.

Pour l'application particulière du procédé à la fabrication de papier sans carbone, on prépare des microcapsules ayant un diamètre moyen de 3 à 20 µm.

Les exemples qui suivent illustrent la présente invention.

Exemple 1

Dans un réacteur de 1,5 litre en verre Pyrex RTM comportant une double enveloppe permettant une circulation de liquide pour le chauffage ou le refroidissement, un couvercle, un réfrigérant, un agitateur turbine de marque POLYTRON et un agitateur cadre en acier inoxydable recouvert de téflon, on charge une solution (a) :
eau : 403 g

sel de sodium de la carboxyméthylcellulose : 4 g.

On agite à l'aide de l'agitateur turbine à 7 800 tours/minute pendant 30 secondes à température ambiante.

Tout en maintenant l'agitation pendant 60 secondes, on ajoute la solution (c) suivante :

solution de colorant :

— terphényle partiellement hydrogéné de marque déposée
SOLGYL TH 40 : 206,6 g
— colorant bleu S4G PERGASCRIPT : 10,9 g
diisocyanato-1,6 hexane : 9,13 g (5,43 × 10⁻² mole)
tris(isocyanato-6 hexyl)-1,3,5 isocyanurate : 36,54 g (7,2 × 10⁻² mole)
hexadécane : 4,3 cm³.

Le rapport pondéral entre le diisocyanato-1,6 hexane et son trimère est de 0,25/l.

On obtient une émulsion stable de gouttelettes de phase organique dans la phase aqueuse.

On met alors en marche l'agitateur cadre à 300 tours/minute ; on arrête l'agitateur turbine et on rajoute la solution (b) suivante :
éthylènediamine : 11,74 g (19,56 × 10⁻² moles)
eau : 5,8 g

L'éthylène diamine chargée représente en fonctions amine 120 % des fonctions isocyanate du diisocyanato-1,6 hexane et de son trimère engagés.

On continue l'agitation pendant 30 minutes à température ambiante (environ 25 °C), puis on monte la température à 60 °C par circulation d'eau thermostatée dans la double enveloppe du réacteur.

On maintient cette température pendant trois heures.

On obtient ainsi une suspension laiteuse, homogène et fluide qui contient 39,8 % de microcapsules ayant un diamètre de 5 µm à 12 µm.

Cette suspension est couchée sur la face d'un papier récepteur qui est couchée au moyen d'une résine acide servant de révélateur (coating fraction : CF). Le couchage de la suspension de microcapsules est effectué à l'aide d'un couteau dont la hauteur est réglée à 20-30 microns par rapport au papier. Le papier ainsi traité est placé pendant une heure à 100 °C en étuve à l'abri de la lumière : pas d'apparition de coloration ; aspect lisse de la face couchée.

On expose ensuite le papier couché à la lumière du jour jusqu'à apparition d'un léger bleuissement : celui-ci apparaît au bout de 72 heures.

Exemple 2

On répète l'exemple 1 dans les mêmes conditions mais avec les charges suivantes :

solution (a) :

eau : 403 g
sel de sodium de la carboxyméthylcellulose :

4 g.

solution (c) :

solution de colorant :
— terphényle partiellement hydrogéné : 206,6 g
— colorant bleu S4G PERGASCRIPT : 10,9 g
diisocyanato-1,6 hexane (HDI) : 4,6 g
tris(isocyanato-6 hexyl)-1,3,5 isocyanurate : 41,1 g
hexadécane : 4,3 cm$^3$
Rapport pondéral HDI/trimère = 0,11/l.

solution (b) :

éthylènediamine : 10,73 g
eau : 4,6 g.

On obtient une suspension laiteuse, homogène et fluide qui contient environ 40 % de microcapsules ayant un diamètre de 5 à 12 μm.

Cette suspension est couchée sur la face CF d'un papier récepteur. Le couchage de la suspension de microcapsules est effectué comme dans l'exemple 1. Le papier ainsi traité est placé pendant une heure à 100 °C en étuve à l'abri de la lumière : pas d'apparition de coloration ; aspect lisse de la face couchée.

On expose ensuite le papier couché à la lumière du jour jusqu'à apparition d'un léger bleuissement : celui-ci apparaît au bout de 24 heures.

Exemple 3

On répète l'exemple 1 dans les mêmes conditions mais avec les charges suivantes :

solution (a) :

eau : 403 g
sel de sodium de la carboxyméthylcellulose : 4 g.

solution (c) :

solution de colorant :
— terphényle partiellement hydrogéné : 206,6 g
— colorant bleu S4G PERGASCRIPT : 10,9 g
diisocyanato-1,6 hexane (HDI) : 13,7 g
tris(isocyanato-6 hexyl)-1,3,5 isocyanurate : 32 g
hexadécane : 4,3 cm$^3$
Rapport pondéral HDI/trimère = 0,43/l.

solution (b) :

éthylènediamine : 12,9 g
eau : 7,0 g.

On obtient une suspension laiteuse, légèrement granuleuse et assez visqueuse qui contient environ 40 % de microcapsules.

Cette suspension est couchée sur la face CF d'un papier récepteur. Le couchage de la suspension de microcapsules est effectué comme dans l'exemple 1. Le papier ainsi traité est placé pendant une heure à 100 °C en étuve à l'abri de la lumière : pas d'apparition de coloration ; aspect légèrement granuleux de la face couchée.

On expose ensuite le papier couché à la lumière du jour jusqu'à apparition d'un léger bleuissement : celui-ci apparaît au bout de 24 heures.

Exemple 4

On répète l'exemple 1 dans les mêmes conditions mais avec les charges suivantes :

solution (a) :

eau : 577 g
sel de sodium de la carboxyméthylcellulose : 4 g.

solution (c) :

solution de colorant :
— terphényle partiellement hydrogéné : 206,6 g
— colorant bleu S4G PERGASCRIPT : 10,9 g
diisocyanato-1,6 hexane (HDI) : 18,3 g
tris(isocyanato-6 hexyl)-1,3,5 isocyanurate : 27,4 g
hexadécane : 4,3 cm$^3$
Rapport pondéral HDI/trimère = 0,67/l.

solution (b) :

éthylènediamine : 13,6 g
eau : 7,3 g.

On obtient une suspension laiteuse, granuleuse et pâteuse qui contient environ 32 % de microcapsules.

Cette suspension est couchée sur la face CF d'un papier récepteur. Le couchage de la suspension de microcapsules est effectué comme dans l'exemple 1. Le papier ainsi traité est placé pendant une heure à 100 °C en étuve à l'abri de la lumière : pas d'apparition de coloration ; aspect granuleux de la face couchée.

On expose ensuite le papier couché à la lumière du jour jusqu'à apparition d'un léger bleuissement : celui-ci apparaît au bout de 24 heures.

Essai comparatif A

On répète à titre de comparaison l'exemple 1 dans les mêmes conditions mais avec les charges suivantes :

solution (a) :

eau : 577 g
sel de sodium de la carboxyméthylcellulose : 4 g.

solution (c) :

solution de colorant :
— terphényle partiellement hydrogéné : 206,6 g

— colorant bleu S4G PERGASCRIPT : 10,9 g
diisocyanato-1,6 hexane (HDI) : 45,68 g
hexadécane : 4,3 cm³
100 % de HDI.

solution (b) :

éthylènediamine : 19,6 g
eau : 16,8 g

On obtient une suspension très fluide nettement colorée qui contient environ 32 % de microcapsules.

Cette suspension est couchée sur la face CF d'un papier récepteur. Le couchage de la suspension de microcapsules est effectué comme dans l'exemple 1. Le papier ainsi traité est placé pendant une heure à 100 °C en étuve à l'abri de la lumière : coloration bleue ; aspect lisse de la face couchée.

Essai comparatif B

On répète à titre de comparaison l'exemple 1 dans les mêmes conditions mais avec les charges suivantes :

solution (a) :

eau : 400 g
sel de sodium de la carboxyméthylcellulose : 6 g.

solution (c) :

solution de colorant :
— terphényle partiellement hydrogéné : 142,5 g
— colorant bleu S4G PERGASCRIPT : 7,5 g
diisocyanato-1,6 hexane (HDI) : 25,2 g
tris(isocyanato-6 hexyl)-1,3,5 isocyanurate : 6,3 g
hexadécane : 3,0 cm³
Rapport HDI/trimère : 4/1.

solution (b) :

éthylènediamine : 12,15 g
eau : 4,0 g.

On obtient une suspension colorée qui contient environ 32 % de microcapsules : la microencapsulation n'est pas totale ; parois des microcapsules fragiles.

Cette suspension est couchée sur la face CF d'un papier récepteur. Le couchage de la suspension de microcapsules est effectué comme dans l'exemple 1. Le papier ainsi traité est placé pendant une heure à 100 °C en étuve à l'abri de la lumière : coloration bleue ; aspect lisse de la face couchée.

Essai comparatif C

On répète à titre de comparaison l'exemple 1 dans les mêmes conditions mais avec les charges suivantes :

solution (a) :

eau : 577 g
sel de sodium de la carboxyméthylcellulose : 4 g.

solution (c) :

solution de colorant :
— terphényle partiellement hydrogéné : 206,6 g
— colorant bleu S4G PERGASCRIPT : 10,9 g
tris(isocyanato-6 hexyl)-1,3,5 isocyanurate : 45,68 g
hexadécane : 4,3 cm³
100 % de trimère.

solution (b) :

éthylènediamine : 9,8 g
eau : 1,0 g.

On obtient une suspension fluide qui contient environ 32 % de microcapsules.

Cette suspension est couchée sur la face CF d'un papier récepteur. Le couchage de la suspension de microcapsules est effectué comme dans l'exemple 1. Le papier ainsi traité est placé pendant une heure à 100 °C en étuve à l'abri de la lumière : pas de coloration ; aspect granuleux de la face couchée.

On expose ensuite le papier couché à la lumière du jour jusqu'à apparition d'un léger bleuissement : celui-ci apparaît au bout de 24 heures.

**Revendications**

1. Procédé de microencapsulation par polyaddition interfaciale, consistant à émulsionner dans un liquide essentiellement aqueux un liquide hydrophobe contenant un polyisocyanate et éventuellement un produit organique dissous, puis à former les parois des microcapsules par addition d'une polyamine, ledit procédé étant caractérisé en ce que le polyisocyanate comprend :
un diisocyanate aliphatique
et le trimère à cycle isocyanurate d'un diisocyanate aliphatique, avec un rapport pondéral diisocyanate aliphatique/trimère de 0,05/1 à 0,70/1.

2. Procédé selon la revendication 1, caractérisé en ce que le polyisocyanate utilisé comprend :
un diisocyanate aliphatique choisi parmi le diisocyanato-1,6 hexane, le diisocyanato-1,5 méthyl-2 pentane, le diisocyanato-1,5 méthyl-3 pentane, le diisocyanato-1,4 diméthyl-2,3 butane, l'éthyl-2 diisocyanato-1,4 butane, le diisocyanato-1,5 pentane, le diisocyanato-1,4 butane, le diisocyanato-1,3 propane, le diisocyanato-1,10 décane, le diisocyanato-1,2 cyclohexane, le diisocyanato-1,4 cyclohexane, le bis(isocyanatométhyl)-1,2 cyclobutane, le bis(isocyanato-4 cyclohexyl) méthane, le triméthyl-3,3,5 isocyanatométhyl-5 isocyanato-1 cyclohexane,

et le trimère à groupement isocyanurate d'un de ces diisocyanates aliphatiques.

3. Procédé selon l'une des revendications 1 ou 2, caractérisé en ce que le rapport pondéral diisocyanate aliphatique/trimère est de 0,10/l à 0,45/l.

4. Procédé selon l'une des revendications 1 à 3, caractérisé en ce que le polyisocyanate utilisé comprend le diisocyanato-1,6 hexane et le tris(isocyanato-6 hexyl)-1,3,5 isocyanurate.

5. Procédé selon l'une des revendications 1 à 4, caractérisé en ce que la polyamine utilisée est choisie parmi celles qui comprennent au moins deux groupements amine primaire ou secondaire et qui peuvent se dissoudre ou se disperser dans l'eau.

6. Procédé selon l'une des revendications 1 à 5, caractérisé en ce que la polyamine utilisée est constituée par l'un ou par plusieurs des composés suivants : l'éthylènediamine-1,2, le diamino-1,3 propane, le diamino-1,4 butane, le diamino-1,6 hexane, l'hydrazine, le diamino-1,4 cyclohexane et le diamino-1,3 méthyl-1 propane, la diéthylènetriamine, la triéthylènetétramine et la bis(méthyl-2 aminoéthyl) méthylamine.

7. Procédé selon l'une des revendications 1 à 6, caractérisé en ce que le liquide hydrophobe est essentiellement non miscible à l'eau et qu'il peut dissoudre le polyisocyanate et, le cas échéant, le produit organique à encapsuler.

8. Procédé selon la revendication 7, caractérisé en ce que le liquide hydrophobe est un hydrocarbure aliphatique, un hydrocarbure aliphatique chloré, un hydrocarbure cycloaliphatique, un hydrocarbure cycloaliphatique chloré, un hydrocarbure aromatique ou un hydrocarbure aromatique chloré.

9. Procédé selon l'une des revendications 1 à 7, caractérisé en ce que le liquide hydrophobe est constitué par le produit organique à encapsuler.

10. Procédé selon l'une des revendications 1 à 8, caractérisé en ce que le produit organique à encapsuler est un colorant.

11. Procédé selon l'une des revendications 1 à 8 et 10, caractérisé en ce que le liquide hydrophobe utilisé est choisi parmi les alkylbiphényles, le terphényle au moins partiellement hydrogéné et les alkylnaphtalènes.

12. Procédé selon l'une des revendications 1 à 11, caractérisé en ce que la phase d'émulsion est effectuée à une température de 15 °C à 30 °C et la phase de polyaddition est effectuée à une température de 15 °C à 30 °C puis à une température de 50 à 80 °C.

13. Procédé selon l'une des revendications 1 à 12, caractérisé en ce que les quantités de polyisocyanate et de polyamine mises en jeu sont telles qu'il y ait de 101 % à 150 % et de préférence de 105 % à 125 % de groupements amine par rapport aux groupements isocyanate.

14. Suspension aqueuse de microcapsules contenant un colorant pour la fabrication de papier sans carbone caractérisée en ce qu'elle est obtenue par le procédé selon l'une des revendications 1 à 13.

15. Suspension selon la revendication 14, caractérisée en ce que les microcapsules ont un diamètre moyen de 3 à 20 μm.

16. Suspension selon l'une des revendications 14 ou 15, caractérisée en ce qu'elle a une concentration en microcapsules égale ou supérieure à 25 % en poids et de préférence égale ou supérieure à 30 % en poids.

## Claims

1. Process for microencapsulation by interfacial polyaddition, consisting in emulsifying in an essentially aqueous liquid a hydrophobic liquid containing a polyisocyanate and, if desired, a dissolved organic material, and in then forming the walls of the microcapsules by the addition of a polyamine, the said process being characterized in that the polyisocyanate comprises :
an aliphatic diisocyanate, and
the isocyanurate ring trimer of an aliphatic diisocyanate, with a weight ratio of aliphatic diisocyanate to trimer of 0.05/1 to 0.70/1.

2. Process according to Claim 1, characterized in that the polyisocyanate employed comprises :
an aliphatic diisocyanate chosen from 1,6-diisocyanatohexane, 1,5-diisocyanato-2-methylpentane, 1,5-diisocyanato-3-methylpentane, 1,4-diisocyanato-2,3-dimethylbutane, 2-ethyl-1,4-diisocyanatobutane, 1,5-diisocyanatopentane, 1,4-diisocyanatobutane, 1,3-diisocyanatopropane, 1,10-diisocyanatodecane, 1,2-diisocyanatocyclohexane, 1,4-diisocyanatocyclohexane, 1,2-bis(isocyanatomethyl) cyclobutane, bis(4-isocyanatocyclohexyl) methane and 3,3,5-trimethyl-5-isocyanatomethyl-1-isocyanatocyclohexane, and
the trimer containing an isocyanurate group of one of these aliphatic diisocyanates.

3. Process according to either of Claims 1 and 2, characterized in that the weight ratio of aliphatic diisocyanate to trimer is from 0.10/1 to 0.45/1.

4. Process according to one of Claims 1 to 3, characterized in that the polyisocyanate employed comprises 1,6-diisocyanatohexane and 1,3,5-tris(6-isocyanatohexyl) isocyanurate.

5. Process according to one of Claims 1 to 4, characterized in that the polyamine employed is chosen from those which contain at least two primary or secondary amine groups and which can be dissolved or dispersed in water.

6. Process according to one of Claims 1 to 5, characterized in that the polyamine employed consists of one or more of the following compounds : 1,2-ethylenediamine, 1,3-diaminopropane, 1,4-diaminobutane, 1,6-diaminohexane, hydrazine, 1,4-diaminocyclohexane and 1,3-diamino-1-methyl-propane, diethylenetriamine, triethylenetetramine and bis(2-methyl-aminoethyl) methylamine.

7. Process according to one of Claims 1 to 6, characterized in that the hydrophobic liquid is essentially water-immiscible and that it can dissolve the polyisocyanate and, if appropriate, the organic material to be encapsulated.

8. Process according to Claim 7, characterized in that the hydrophobic liquid is an aliphatic hydrocarbon, a chlorinated aliphatic hydrocarbon, a cycloaliphatic hydrocarbon, a chlorinated cycloaliphatic hydrocarbon, an aromatic hydrocarbon or a chlorinated aromatic hydrocarbon.

9. Process according to one of Claims 1 to 7, characterized in that the hydrophobic liquid consists of the organic material to be encapsulated.

10. Process according to one of Claims 1 to 8, characterized in that the organic material to be encapsulated is a colourant.

11. Process according to one of Claims 1 to 8 and 10, characterized in that the hydrophobic liquid employed is chosen from alkylbiphenyls, at least partially hydrogenated terphenyl and alkylnaphthalenes.

12. Process according to one of Claims 1 to 11, characterized in that the emulsifying stage is carried out at a temperature of 15 °C to 30 °C and the polyaddition stage is carried out at a temperature of 15 °C to 30 °C and then at a temperature of 50 to 80 °C.

13. Process according to one of Claims 1 to 12, characterized in that the quantities of polyisocyanate and of polyamine which are employed are such that there are 101 % to 150 % and preferably from 105 % to 125 % of amine groups in relation to the isocyanate groups.

14. Aqueous suspension of microcapsules containing a colourant for the manufacture of carbon-free paper, characterized in that it is obtained by the process according to one of Claims 1 to 13.

15. Suspension according to Claim 14, characterized in that the microcapsules have a mean diameter of 3 to 20 μm.

16. Suspension according to either of Claims 14 and 15, characterized in that it has a concentration of microcapsules which is equal to or greater than 25 % by weight and is preferably equal to or greater than 30 % by weight.

**Patentansprüche**

1. Verfahren zur Mikroverkapselung durch Grenzflächen-Polyaddition, darin bestehend, daß in einer im wesentlichen wäßrigen Flüssigkeit eine hydrophobe Flüssigkeit emulgiert wird, die ein Polyisocyanat und gegebenenfalls ein gelöstes, organisches Produkt enthält, die Wände der Mikrokapseln dann durch Zugabe eines Polyamins gebildet werden, wobei das Verfahren dadurch gekennzeichnet ist, daß das Polyisocyanat enthält :

ein aliphatisches Diisocyanat

und das Trimere eines aliphatischen Diisocyanats mit Isocyanurat-Ring mit einem Gewichtsverhältnis aliphatisches Diisocyanat/Trimeres von 0,05/1 bis 0,70/1.

2. Verfahren gemäß Anspruch 1, dadurch gekennzeichnet, daß das verwendete Polyisocyanat enthält :

ein aliphatisches Diisocyanat, ausgewählt unter 1,6-Diisocyanato-hexan, 1,5-Diisocyanato-2-methyl-pentan, 1,5-Diisocyanato-3-methyl-pentan, 1,4-Diisocyanato-2,3-dimethyl-butan, 2-Ethyl-1,4-diisocyanato-butan, 1,5-Diisocyanato-pentan, 1,4-Diisocyanato-butan, 1,3-Diisocyanato-propan, 1,10-Diisocyanato-decan, 1,2-Diisocyanato-cyclohexan, 1,4-Diisocyanato-cyclohexan, 1,2-Bis-(isocyanatomethyl)-cyclobutan, Bis-(4-isocyanatocyclohexyl)-methan, 3,3,5-Trimethyl-5-isocyanatomethyl-1-isocyanato-cyclohexan,

und das Trimere eines dieser aliphatischen Diisocyanate mit Isocyanurat-Gruppierung.

3. Verfahren gemäß einem der Ansprüche 1 oder 2, dadurch gekennzeichnet, daß das Gewichtsverhältnis aliphatisches Diisocyanat/Trimeres von 0,10/1 bis 0,45/1 beträgt.

4. Verfahren gemäß einem der Ansprüche 1 bis 3, dadurch gekennzeichnet, daß das verwendete Polyisocyanat das 1,6-Diisocyanato-hexan und das 1,3,5-Tris-(6-isocyanato-hexyl)-isocyanurat enthält.

5. Verfahren gemäß einem der Ansprüche 1 bis 4, dadurch gekennzeichnet, daß das verwendete Polyamin ausgewählt ist unter denjenigen, die mindestens zwei primäre oder sekundäre Amingruppen enthalten und sich sich in Wasser auflösen oder dispergieren können.

6. Verfahren gemäß einem der Ansprüche 1 bis 5, dadurch gekennzeichnet, daß das verwendete Polyamin aus einer oder mehreren der folgenden Verbindungen besteht : 1,2-Ethylendiamin, 1,3-Diaminopropan, 1,4-Diaminobutan, 1,6-Diaminohexan, Hydrazin, 1,4-Diaminocyclohexan und 1,3-Diamino-1-methylpropan, Diethylentriamin, Triethylentetramin und Bis-(2-methyl-aminoethyl)-methylamin.

7. Verfahren gemäß einem der Ansprüche 1 bis 6, dadurch gekennzeichnet, daß die hydrophobe Flüssigkeit im wesentlichen mit Wasser nicht mischbar ist und daß sie das Polyisocyanat und gegebenenfalls das einzukapselnde, organische Produkt auflösen kann.

8. Verfahren gemäß Anspruch 7, dadurch gekennzeichnet, daß die hydrophobe Flüssigkeit ein aliphatischer Kohlenwasserstoff, ein chlorierter, aliphatischer Kohlenwasserstoff, ein cycloaliphatischer Kohlenwasserstoff, ein chlorierter, cycloaliphatischer Kohlenwasserstoff, ein aromatischer Kohlenwasserstoff oder ein chlorierter, aromatischer Kohlenwasserstoff ist.

9. Verfahren gemäß einem der Ansprüche 1 bis 7, dadurch gekennzeichnet, daß die hydrophobe Flüssigkeit aus dem einzukapselnden, organischen Produkt besteht.

10. Verfahren gemäß einem der Ansprüche 1 bis 8, dadurch gekennzeichnet, daß das einzukapselnde, organische Produkt ein Farbstoff ist.

11. Verfahren gemäß einem der Ansprüche 1 bis 8 und 10, dadurch gekennzeichnet, daß die verwendete, hydrophobe Flüssigkeit ausgewählt ist unter den Alkylbiphenylen, dem wenigstens teilweise hydrierten Terphenyl und den Alkylnaphthalinen.

12. Verfahren gemäß einem der Ansprüche 1 bis 11, dadurch gekennzeichnet, daß die Emulsionsphase bei einer Temperatur von 15 bis 30 °C bewirkt wird und die Polyadditionsphase bei einer Temperatur von 15 bis 30 °C und dann bei einer Temperatur von 50 bis 80 °C bewirkt wird.

13. Verfahren gemäß einem der Ansprüche 1 bis 12, dadurch gekennzeichnet, daß die eingesetzten Polyisocyanat- und Polyaminmengen derart sind, daß 101 % bis 150 % und vorzugsweise 105 bis 125 % Amingruppierungen in bezug auf Isocyanatgruppen vorliegen.

14. Wäßrige Suspension von Mikrokapseln, enthaltend einen Farbstoff zur Erzeugung von Kohlefreiem Papier, dadurch gekennzeichnet, daß sie durch das Verfahren gemäß einem der Ansprüche 1 bis 13 erhalten wird.

15. Suspension gemäß Anspruch 14, dadurch gekennzeichnet, daß die Mikrokapseln einen mittleren Durchmesser von 3 bis 20 $\mu$m haben.

16. Suspension gemäß einem der Ansprüche 14 oder 15, dadurch gekennzeichnet, daß sie eine Konzentration an Mikrokapseln gleich oder über 25 Gew.% und vorzugsweise gleich oder über 30 Gew.% hat.